# EUROPEAN PATENT APPLICATION

(11) **EP 2 263 434 A1**
(43) Date of publication of application: **22.12.2010**
(21) Application number: 10165985.2
(22) Date of filing: 15.06.2010
(51) Int. Cl.: A01B 33/02

(54) **Electric rotary tiller**

(30) Priority: 16.06.2009 JP 2009143433; 29.09.2009 JP 2009224938
(71) Applicant: ISEKI & CO., LTD., Matsuyama-shi Ehime-ken 799-2692 (JP)
(72) Inventor: Nakagawa, Hideaki, Iyo-gun Ehime 791-2193 (JP); Tomihisa, Akira, Iyo-gun Ehime 791-2193 (JP); Kuroda, Kyosei, Iyo-gun Ehime 791-2193 (JP); Ninomiya, Koji, Iyo-gun Ehime 791-2193 (JP); Miyauchi, Masao, Iyo-gun Ehime 791-2193 (JP)
(74) Representative: TBK-Patent

(57) **Abstract**

An electric rotary tiller including a rotary section (R) that tills a field, a motor 8 that drives the rotary section (R), a transmission shaft (21) that transmits power of the motor (8) to the rotary section (R), a transmission frame (2) equipped internally with the transmission shaft (21), a body frame (10) to be fixed onto the transmission frame (2), a motor cover (7) that covers the motor (8) from above, a battery case (9) having a battery (B) being a power supply of the motor (8) stored, and a rotary cover 6 that covers the rotary section (R) from above, in which an opening portion (6b) is provided in a laterally middle portion of the rotary cover (6), a wall portion (6a) is provided along both left and right sides of the opening portion (6b), the battery case (9) is placed on the body frame (10), the wall portion (6a) supports left and right side surfaces of the battery case (9), and the battery case (9) is freely fitted and removed vertically from the body frame (10), which allows securely supporting the battery case (9) on the body frame (10), while easily allowing fitting and removing of the battery case (9).

## Description

### Technical Field

The present invention relates to an electric rotary tiller that performs tilling by a battery such as a lithium battery.

### Background Art

Conventionally, electric rotary tillers which are moved by walking behind them for tilling a relatively small area of fields such as kitchen gardens are known. For example, an electric rotary tiller which is moved by walking behind it disclosed in Japanese Published Unexamined Patent Application No. 2004-166629 ( Prior Art Document 1) includes a rotary tiller body equipped with a rotary tilling device and a handle provided extending from the rotary tiller body, and an electric motor that drives the rotary tilling device and a battery that feeds electricity into the electric motor are mounted on a body frame of the rotary tiller body. Since the battery is removable from the body frame, it can therefore be removed from the body frame and brought to the vicinity of a power outlet when the battery is charged, and thus, replenishing the electric rotary tiller with power is very easy.

### Summary of the Invention

### Problems to be Solved by the Invention

Since the battery is merely placed on the body frame of the electric rotary tiller described in Prior Art Document 1, the battery may possibly come off from the body frame due to vibration during operation of a rotary tiller and its tilt when changing in direction. Providing a separate fixture for supporting the battery in order to prevent coming off results in taking time to fit and remove the battery.

It is an object of the present invention to provide an electric rotary tiller that allows securely supporting the battery case on the body frame side, while easily allowing fitting and removing of the battery case.

### Means for Solving the Problems

The above object of the present invention can be achieved by the following means.

That is, a first aspect of the present invention is an electric rotary tiller comprising a rotary section (R) that tills a field, a motor (8) that drives the rotary section (R), a transmission shaft (21) that transmits power of the motor (8) to the rotary section (R), a transmission frame (2) equipped internally with the transmission shaft (21), a body frame (10) to be fixed on top of the transmission frame (2), a motor cover (7) that covers the motor (8) from above, a battery case (9) having a battery (B) being a power supply of the motor (8) stored, and a rotary cover (6) that covers the rotary section (R)from above, in which the battery case (9) is placed on the body frame (10), an opening portion (6b) is provided in a laterally middle portion of the rotary cover (6), a wall portion (6a) is formed along both left and right sides of the opening portion (6b), the battery case (9) is supported at its left and right side surfaces by the wall portion (6a), and the battery case (9) is freely fitted and removed vertically from the body frame (10).

A second aspect of the present invention is the electric rotary tiller according to the first aspect, in which an output terminal (18) is provided exposed on a back surface side of the battery case (9), and a rear support wall portion (6d) that supports the back surface of the battery case (9) is provided on the rotary cover (6), and the rear support wall portion (6d) is lower than the wall portion (6a).

A third aspect of the present invention is the electric rotary tiller according to the first or second aspect, in which a front surface of the battery case (9) is supported by a rear surface of the motor cover (7).

A fourth aspect of the present invention is the electric rotary tiller according to the first aspect, in which a projection portion (9f) is provided on the bottom surface of the battery case (9), a hole portion (10a) into which the projection portion (9f) is inserted is formed on the body frame (10), a projection rib portion (9g) is formed extending vertically on a front surface of the battery case (9), a recess portion (7a) that engages with the projection rib portion (9g) is formed on a back surface of the motor cover (7), and the battery case (9) is fixable to the body frame (10).

### Effects of Invention

According to the first aspect, the battery case (9) is supported at its left and right side surfaces by the wall portion (6a) formed along both left and right sides of the opening portion (6b) of the rotary cover (6), and the battery case (9) is removable vertically from the body frame (10), and thus the battery case (9) can be easily fitted and removed from the body frame (10), and be made difficult to come off during tilling.

According to the second aspect, in addition to the effect of the first aspect of the present invention, as a result of the rear support wall portion (6d) of the rotary cover (6) being formed lower than the wall portion (6a) that supports the side surface of the battery case (9), the rear support wall portion (6d) can support the rear surface of the battery case (9). Moreover, by exposing the output terminal (18) on the back surface side of the machine body, connection of wiring to the output terminal (18) is easily performed.

According to the third aspect, in addition to the effect of the first or the second aspect of the present invention, as a result of supporting the front surface of the battery case (9) by the rear surface of the motor cover (7), the battery case (9) and the motor cover (7) can be easily supported on the body frame (10).

According to the fourth aspect, in addition to the effect of the first aspect of the present invention, for setting the battery case (9) in the machine body, as a result of the projection portion (9f) of the battery case (9) being inserted into the hole (10a),with the battery case (9) and the motor cover (7) engaged, with the projection rib portion (9g) for positional fixation being engaged with the recess portion (7a) formed on the back surface of the motor cover (7), the battery case (9) can be positionally fixed on the body frame (10). For taking out the battery case (9) from the body frame (10), it suffices to, for example, only pull up a handle (9e) provided on the battery case (9). Thus, the battery case (9) can be easily fitted and removed from the body frame (10).

### Brief Description of Drawings

Fig. 1 is a side view of an electric rotary tiller of an embodiment of the present invention.
Fig. 2 is a back view of the electric rotary tiller of Fig. 1.

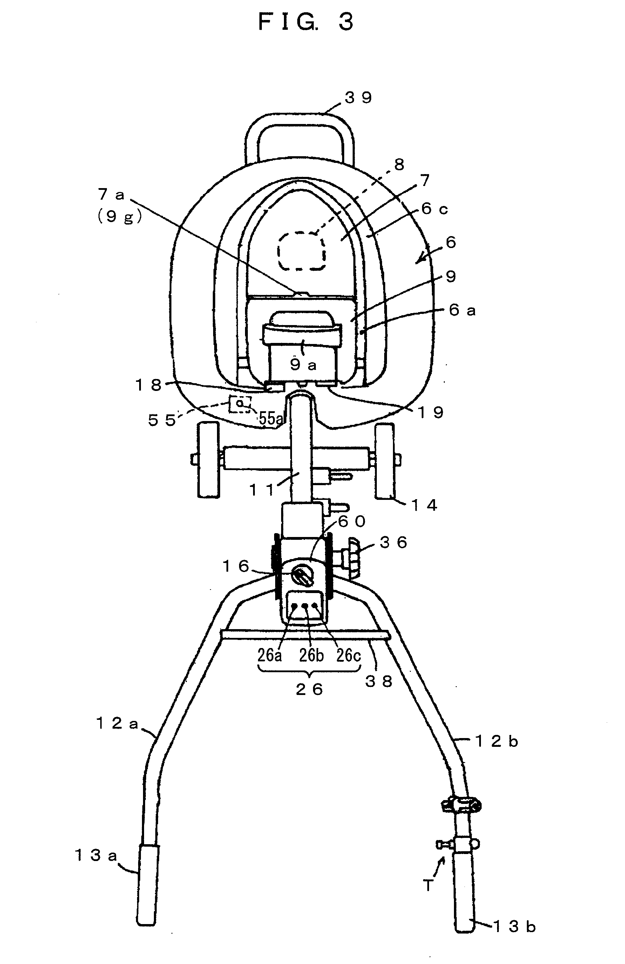

Fig. 3 is a plane view of the electric rotary tiller of Fig. 1.

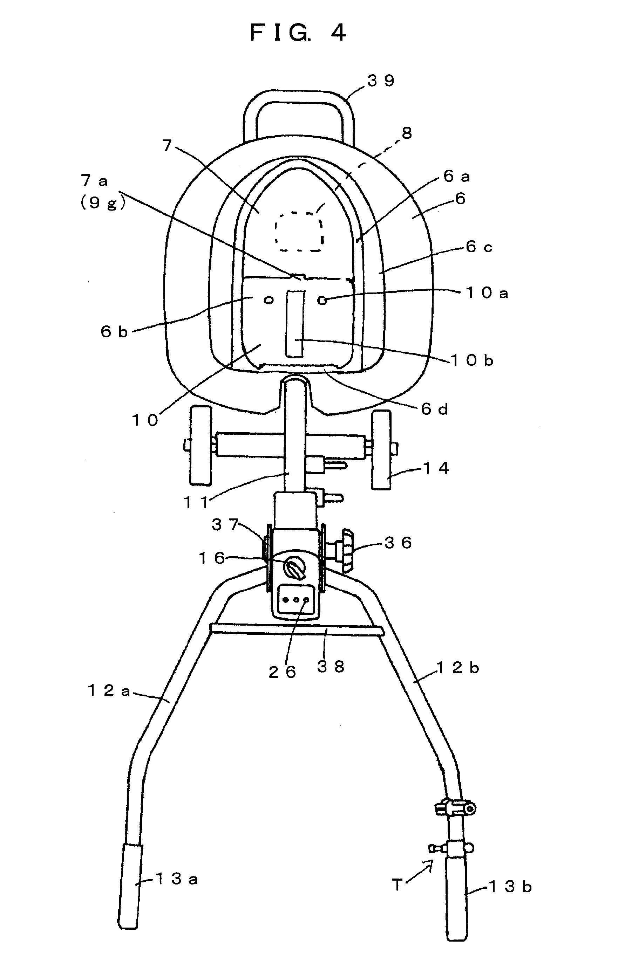

Fig. 4 is a plane view of the electric rotary tiller of Fig. 1 showing a state with a battery case removed.

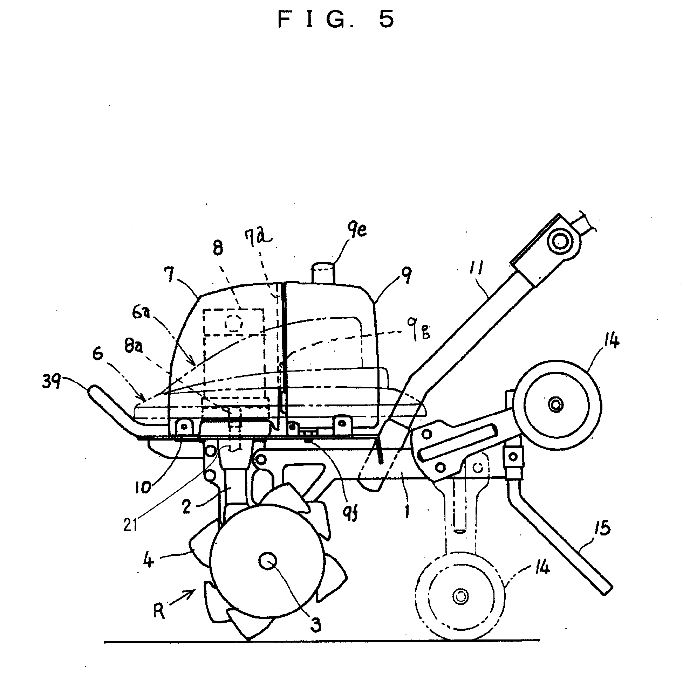

Fig. 5 is an enlarged side view of the electric rotary tiller of Fig. 1.
Fig. 6 is a front view of an interior of the battery case of the electric rotary tiller of Fig. 1.
Fig. 7 is a control block diagram of the electric rotary tiller of Fig. 1.
Fig. 8(A) is a front view of the battery case and Fig. 8 (B) is a back view of the battery case, of the electric rotary tiller of Fig. 1.

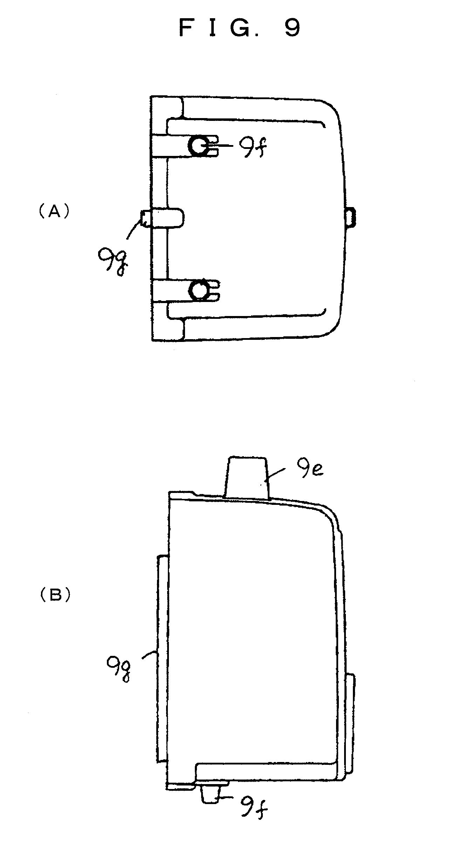

Fig. 9 (A) is a bottom view of the battery case and Fig. 9 (B) is a side view of the battery case, of the electric rotary tiller of Fig. 1.
Fig. 10(A) and (B) are side views showing actuation of a safety device of the electric rotary tiller of Fig. 1.
Fig. 11 (A) and (B) are plane views showing actuation of a safety device of the electric rotary tiller of Fig. 1.
Fig. 12 is a side view showing a folded state of a handle of the electric rotary tiller of Fig. 1.
Fig. 13 is a perspective view of a bucket of the electric rotary tiller of Fig. 1.

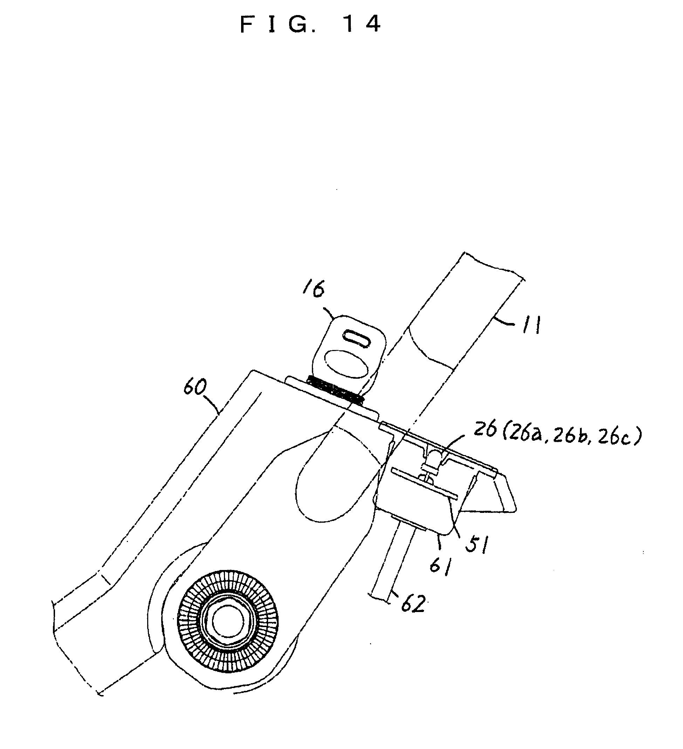

Fig. 14 is an enlarged side view of a handle frame portion of the electric rotary tiller of Fig. 1.

### Description of Embodiments

An example of working machines which are moved by walking behind them, of the present invention will be described based on the drawings of an electric rotary tiller.

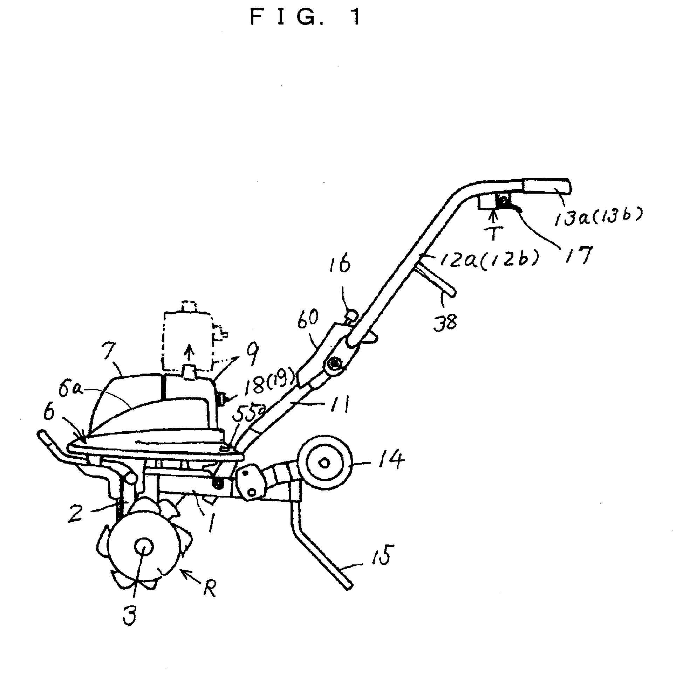

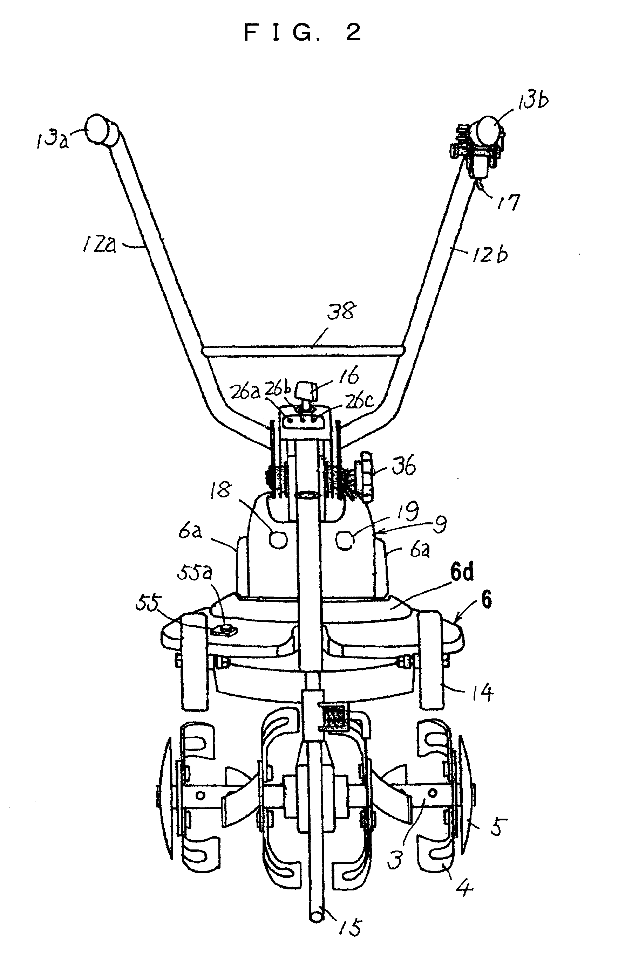

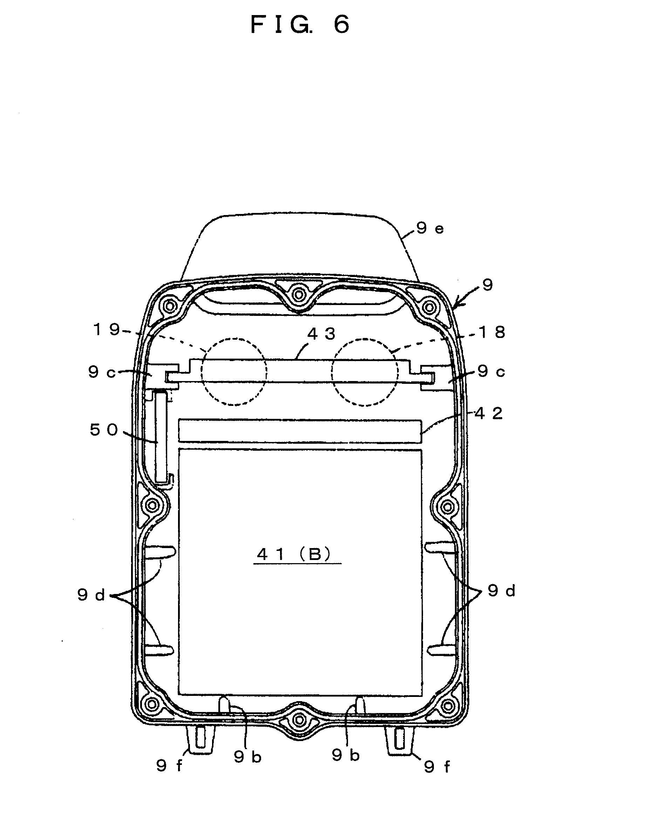

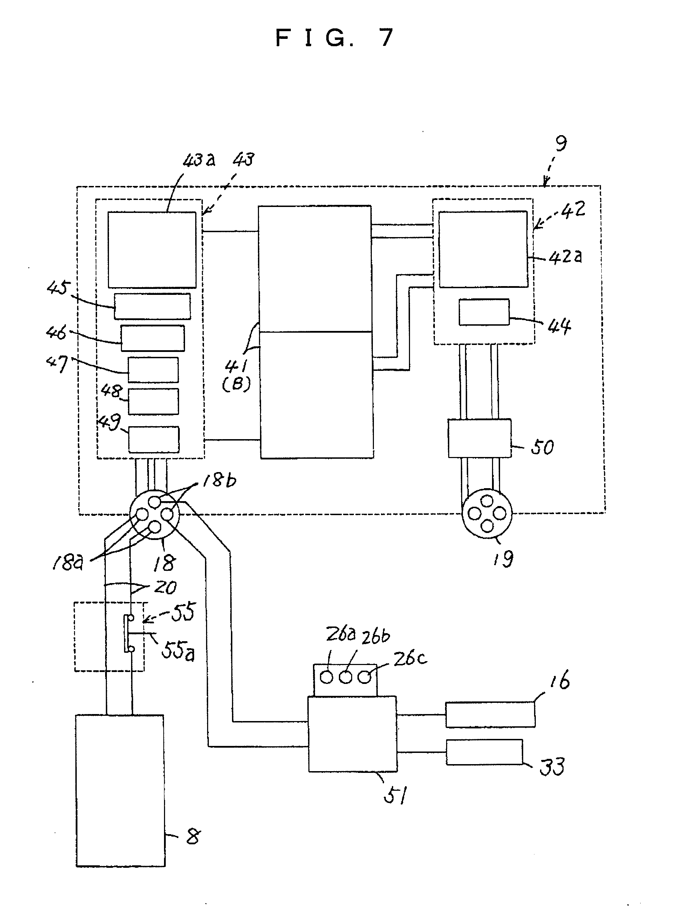

The electric rotary tiller shown in Fig. 1, Fig. 2, etc., is equipped with, on a body frame 10, a rotary section R that tills a field, an electric motor 8 that drives the rotary section R, a motor cover 7 that covers the electric motor 8 from above, a battery case 9 having a battery B (Fig. 6, Fig. 7) being a power supply of the electric motor 8 stored, and a rotary cover 6 that covers the rotary section R from above.

A transmission frame 2 is provided under the dish-like body frame 10, and a machine frame 1 is extended rearward from the transition frame 2. On a lower portion of the transmission frame 2, a rotary shaft 3 that is driven to rotate around a horizontal axis due to a transmission via a transmission shaft 21 is pivotally supported, a plurality of rotary tines 4 are disposed on the outer periphery of the rotary shaft 3 extending laterally from the transmission frame 2, and side disks 5, 5 are attached to both left and right ends of the rotary shaft 3 to thereby construct the rotary section R.

The rotary cover 6 having a disk shape in a plane view that covers the rotary section R from above is attached to an upper portion of the body frame 10. A wall portion 6a having a U-shape in a plane view is formed in a laterally middle portion of the rotary cover 6, and an opening portion 6b is formed along the inside of the wall portion 6a. The motor cover 7 is attached to a front side of the opening portion 6b, the motor cover 7 is equipped internally with the electric motor 8, and the battery case 9 with the battery B housed is inserted into a rear side of the opening portion 6b with the battery case 9 removable. The electric motor 8 and the battery case 9 are placed on the body frame 10 and arranged penetrating through the opening portion 6b. The transmission shaft 21 is fitted inside of the transmission frame 2, and the power of the electric motor 8 rotates a plurality of rotary tines 4 provided on the outer periphery of the rotary shaft 3 by way of the transmission shaft 21.

A front lower end side of a handle frame 11 is attached to a rear portion of the attachment frame 1. The handle frame 11 extends obliquely rearward, left and right operation handles 12a, 12b are provided branching from a rear end side of the handle frame 11, and grips 13a, 13b are provided at rear end portions of the left and right operation handles 12a, 12b respectively.

A support wheel 14 that supports the machine body when moving the electric rotary tiller and a resist rod 15 for preventing dashing at the time of tilling are attached to a rear end portion of the machine frame 1. Fig. 1 shows a working posture with the support wheel 14 flipped up.

Next, a drive configuration of the machine body will be described.

A power switch 16 that turns on and off the power supply is provided at the branching position between the handle frame 11 and the operation handles 12a, 12b, and an operation lever 17 that turns on and off the drive of the electric motor 8 is provided in the vicinity of one of the left and right grips 13b, 13b. An output terminal 18 of a motor drive circuit 20 (see Fig. 7) that connects the battery B in the battery case 9 with the electric motor 8 and a charge terminal 19 for charging the battery B are provided on a rear surface of the battery case 9.

Description will be given here of an internal structure of the battery case 9. The battery case 9 exhibits a rectangular parallelepiped shape and the output terminal 18 and the charge terminal 19 are provided at its rear outer wall, and a removable cover 9a is provided at its front wall. There is provided in such a battery case 9 the battery B consisting of a plurality of cells 41, 41 (see Fig. 7) making up 1/2 or more of its capacity and charge control boards 42, 42 incorporated with a charge control circuit 42a on an upper surface of each of the cells 41, 41, so as to be freely inserted and removed by sliding back and forth on guide ribs 9b, 9b (see Fig. 6) provided like rails in a bottom portion. While a terminal of the charge control board 42is connected by wiring to the charge terminal 19 as shown in Fig. 7, it is directly electrically connected with each cell 41, 41 respectively.

A discharge control board 43 incorporated with a discharge control circuit 43a with an appropriate interval is provided above the charge control boards 42, 42 disposed nearly on the same plane. Ribs 9c, 9c (see Fig. 6) formed with guide recess portions being in a longitudinal direction are formed at an inner peripheral sidewall portion of the battery case 9, and end portions of the discharge control board 43 are inserted into the guide recess portions and are slid so as to be fitted or removed. In addition, the discharge control board 43 has a circuit configuration so as to allow a voltage due to a series connection of a plurality of battery cells 41, 41 to be output to the output terminal 18. There are provided on an inside surface of the battery case 9 ribs 9d, 9d... (see Fig. 6) that maintain a distance between the battery cells 41, 41 and the inner wall.

The charge control boards 42, 42 are incorporated with an overcharge prevention circuit 44, while the discharge control board 43 is incorporated with an overcurrent protection circuit 45, an ON/OFF signal smoothing circuit 46, a surge current control circuit 47, an overdischarge prevention circuit 48, and a short-circuit prevention circuit 49. Moreover, a short-circuit prevention for the discharge control board 43 in them can be carried out by the short-circuit prevention circuit 49, whereas for a short-circuit prevention for the charge control boards 42, 42, without being provided for each of these charge control boards 42, 42, a common short-circuit prevention circuit 50 is provided within the battery case 9, between the charge terminal 19 and the charge control boards 42, 42 and at one side of the discharge control board 43, so as to be freely inserted and extracted in a vertical posture.

Description will next be given of the output terminal 18 of the battery case 9.

As output terminals 18a, 18a to the electric motor 8, there are two positive and negative terminals so as to connect to the electric motor 8 side through the motor drive circuit 20, and the other two terminals 18b, 18b are terminals for signal input/output. More specifically, this pair of terminals 18b, 18b can be input with an on/off signal of the power switch 16, a limit switch 33 linked to an operation lever 17, or the like from a signal control board 51 to output a control signal to the discharge control circuit 43a, or is input with a battery level and an alarm display signal to be described later from the signal control board 51 based on output from the discharge control circuit 43a to output a signal to a power on/off LED 26a, an operation alarm LED 26b, and a battery level LED 26c.

The output terminals 18a, 18a are connected to the electric motor 8 via a breaker 55. More specifically, the breaker 55 includes an operating section 55a that switches the motor drive circuit 20 to a disconnection and incorporates a solenoid (not shown), and is excited when a current value of the motor drive circuit 20 has risen to actuate the operating section 55a and bring the motor drive circuit 20 into an interrupted state, thereby turning off the electric motor 8. In addition, the operating section 55a of the breaker 55 is disposed on an upper surface of the rotary cover 6.

The output terminal 18 and the charge terminal 19 are provided on both left and right sides of the handle frame 11 respectively, in a back view of the machine body, and this configuration allows an operator to easily insert and remove wiring with little obstruction of the handle frame 11 from a rear side of the machine body of an operation side. Moreover, the output terminal 18 and the charge terminal 19, which are arranged on both left and right sides across the handle frame 11 in a back view, are thus visually distinguishable to prevent an erroneous insertion in terms of the left and right.

The motor drive circuit 20 that connects the breaker 55 and the electric motor 8 with each other passes from a lower portion of the battery case 9 through a space between an inclination portion 6c formed on the outer periphery of the wall portion 6a of the rotary cover 6 and the body frame 10.

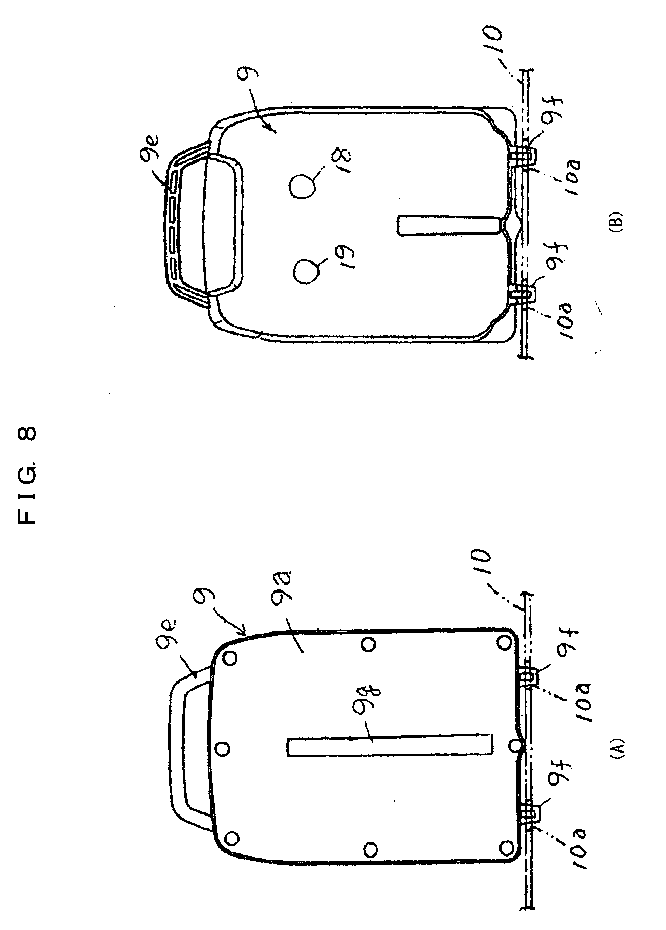

As shown in Fig. 8, the battery case 9 is formed at its upper surface with a handle 9e, formed at its lower surface with a plurality of projection portions 9f for positional fixation, and by inserting the projection portions 9f for positional fixation into hole portions 10a for positional fixation formed in the body frame 10, the position to place the battery case 9 can be fixed. Moreover, the battery case 9 is supported at its left and right side surfaces by the wall portion 6a of the rotary cover 6, and formed at its front surface with a projection rib portion 9g for positional fixation vertically extending long to be engaged with a recess portion 7a for positional fixation formed in the motor cover 7. Moreover, an opening portion 10b is provided in the laterally middle of the body frame 10 so as to allow draining water, such as rainwater, that has flowed in the body frame 10.

For setting the battery case 9 in the machine body, by matching the projection rib portion 9g for positional fixation to the recess portion 7a for positional fixation to bring both portions into a fitted state and laying them down as are, the projection portions 9f for positional fixation are inserted into the holes 10a for positional fixation, so that the battery case 9 is positionally fixed. When taking out the battery case 9, the battery case 9 can be taken out by only pulling up the handle 9e.

The battery case 9 in the present embodiment is supported at its front surface by the motor cover 7 and supported at its side surfaces by the wall portion 6a of the rotary cover 6, but the wall portion 6a may be formed separately from the rotary cover 6. The wall portion 6a may be formed by, for example, a wall portion attached to the side of the body frame 10. Moreover, forming the wall portion 6a in an inclined shape extending rearwardly upward allows securely supporting the battery case 9 and enhancing the appearance of the machine body as a whole.

Moreover, a rear support wall portion 6d is formed on the rotary cover 6 on a back surface side of the battery cover 9a to support the battery case 9 from behind. The rear support wall portion 6d is formed lower than the wall portion 6a that supports the side surfaces of the battery case 9 to expose the output terminal 18 and charge terminal 19 to a back surface side of the machine body, thereby allowing easy connection to the output terminal 18 and charge terminal 19.

The removable cover 9a to serve as a front wall of the battery case 9, which is located between the battery case 9 and the motor case 7, is formed inside of the outer periphery of the body of the battery case 9 and formed with outer peripheries of the motor case 7 and battery case 9 approximately aligned with each other to thereby reduce a gap therebetween, enhance the appearance because of the invisible cover 9a from the outside, and reduce rainwater intrusion.

Next, a safety device T of the operation lever 17 will be described.

The operation lever 17 turns about a horizontal shaft 30 provided penetrating through a wall surface of a cover member 29 that reaches lower than the grips 13a, 13b, covering the grips 13a, 13b provided at rear end portions of the operation handles 12a, 12b. The horizontal shaft 30 is provided in a direction (lateral direction) intersecting a grasping portion 17b. There is provided a switch operating portion 17a formed in front of the horizontal shaft 30 and a grasping portion 17b formed behind the horizontal shaft 30. The limit switch 33 sends a signal to a control section of the signal control board 51 based on a turning motion of the switch operating portion 17a to turn on and off the drive of the electric motor 8. Both ends of a spring 25 that returns the operation lever 17 turned by grasping the grasping portion 17b are coupled to its initial position to a projection 30a being integral with the horizontal shaft 30 and an appropriate part of the cover member 29.

Moreover, a moving shaft 31 is provided at a position penetrated through the wall surface of the cover member 29 of a position more rearward than the horizontal shaft 30. The moving shaft 31 is supported in a direction (lateral direction) intersecting the grasping portion 17b, and arranged on the wall surface of the cover member 29 so as to slide in the lateral direction. There is formed, at the inside of the handle 13b, that is, at the end of the moving shaft 31, a pushing portion 31c for a pushing operation of the moving shaft 31 from the inside of the handle 13b toward the outside, and a spring 35 is wound around the moving shaft 31 between the pushing portion 31c and wall surface of the cover member 29.

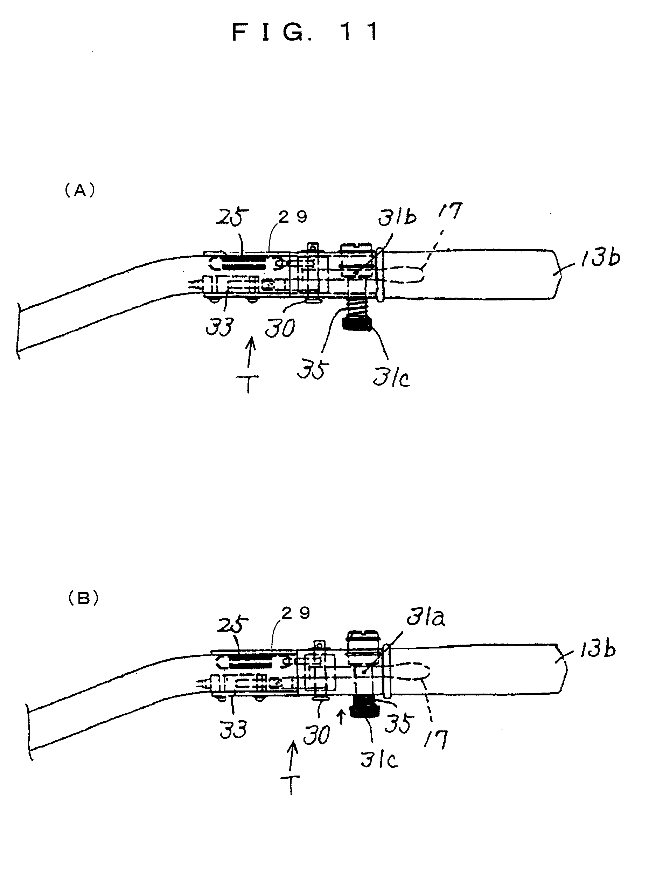

The moving shaft 31 is formed with a small diameter portion 31a and a large diameter portion 31b in order adjacent to each other from the inside of the handle 13b. In addition, the large diameter portion 31b is located on a turning track of the grasping portion 17b at an initial position of the safety device T composed of the operation lever 17, the spring 25, the cover member 29, the horizontal shaft 30, the moving shaft 31, and the spring 35 (Fig. 11(A)).

Description will be given in the following of the operation at the time of tilling of the operation lever 17 and the safety device T.

A charged state of the battery B is confirmed based on whether the battery level LED 26c is blinking, and if it is insufficient, a charger or a 100V power supply is connected to the charge terminal 19 to perform predetermined charge.

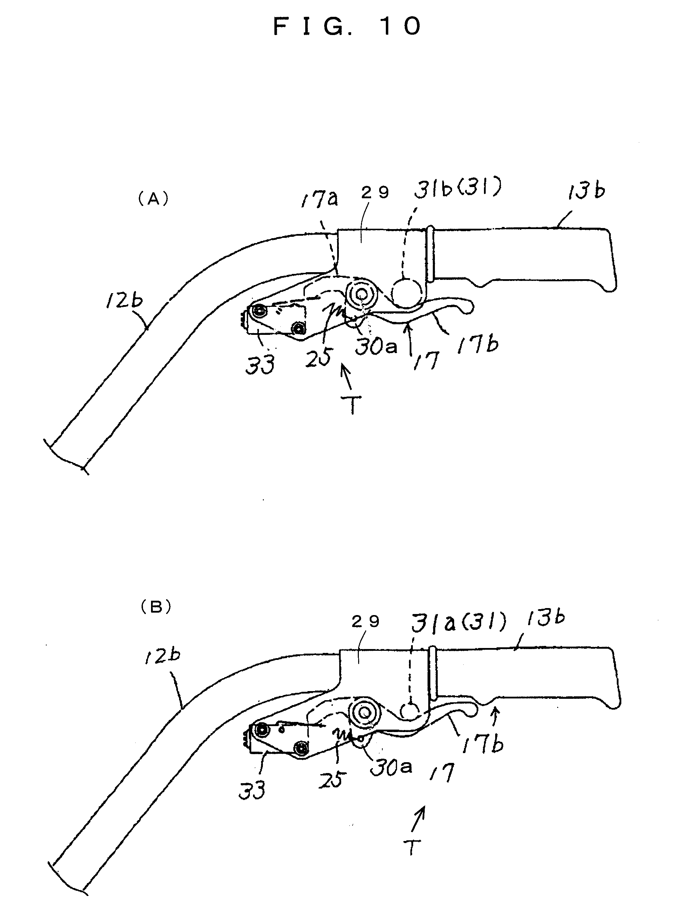

At the start of tilling, the operator turns on the power switch 16, pushes the pushing portion 31c formed at the end portion of the moving shaft 31 with his/her thumb to locate the small diameter portion 31a on a turning track being in the vertical direction of the operation lever 17 (Fig. 11(B)), and then grasps and turns the grasping portion 17b up to a position where the limit switch 33 is turned on. An ON signal of the limit switch 33 is transmitted to the discharge control circuit 43a by way of the signal control board 51, and the electric motor 8 is driven by the battery B. The rotary section R is rotated in response to the rotation of the electric motor 8 to perform tilling (Fig. 10(B)).

When the operator releases the grasping portion 17b for stopping tilling, the switch operating portion 17a is turned up to the initial position by the action of the spring 25 , an OFF signal of the limit switch 33 is transmitted to interrupt a driving current of the battery B, and the rotary section R is stopped (Fig. 10(A)).

Even when the operator carries the electric rotary tiller with the power switch 16 turned on and the grasping portion 17b of the operation lever 17 is turned on unexpectedly by touching it, thegraspingportion 17b contacts the large diameter portion 31b of the moving shaft 31, the switch operating portion 17a is not turned up to a position to turn on the limit switch 33, and the limit switch 33 is not turned on, so that the rotary section R is never unexpectedly rotated even when the operator carries the electric rotary tiller without knowing that the power switch 16 is on, which is thus safe.

When the motor drive circuit 20 is loaded to reach a predetermined current value or more, the breaker 55 makes the motor drive circuit 20 operate to an interruption side, and switches the operating portion 55a to an off-side. Therefore, for re-starting, the operating portion 55a needs to be operated and switched on. In addition, by operating the operating portion 55a of the breaker 55 to switch the motor drive circuit 20 to an interruption side (off) such as before maintenance of the rotary section R, non-driving of the electric motor 8 can be reliably secured, which is safe.

Because this operation portion 55a is disposed in the vicinity (at a rear left side of the rotary cover 6 in the illustration) of the rotary cover 6, and is therefore present at a position close to the part subjected to maintenance work, this is convenient. That is, the power switch 16 disposed on the handle frame 11 is easy to use for an operator who performs steering, but is distant in case of maintenance of the rotary section R, which is inconvenient, while it is easy to reach the operation portion 55a when this is provided on the upper surface of the rotary cover 6 as described above, which is convenient.

The overcurrent protection circuit 45 in the discharge control board 43 stops discharge output when having detected an overcurrent of the discharge control circuit 43a section, so that current does not flow to the motor drive circuit 20. Moreover, the ON/OFF signal smoothing circuit 46, particularly even when the current at start-up is unstable, smoothens this to secure smooth transmission. Moreover, the surge current control circuit 47 prevents occurrence of a surge current that may occur when turning on and off of the limit switch 33 by the operation lever 17 at start-up are intermittently repeated. Therefore, the ON/OFF signal smoothing circuit 46 and surge current control circuit 47 have a circuit configuration associated with a mechanical disconnection of the limit switch 33 by the operation lever 17.

Further, the overdischarge prevention circuit 48 of the discharge control board 43 controls a voltage from the battery B to be suppressed to a predetermined value or less (for example, 18V or less) when this voltage is excessive. The short-circuit prevention circuit 49 relates to protection of the discharge control circuit 43a section when the part of the output terminal 18 has reached a short-circuit state, and protection of the charge control circuit 42a section when the part of the charge terminal 19 has reached a short-circuit state can be realized by another short-circuit prevention circuit 50.

A controller according to the present embodiment has a configuration for which the charge control boards 42, 42 are directly connected to battery cells 41, 41 respectively, and are housed in the battery case 9, and the discharge control board 43 is fitted within the battery case 9 in a manner separated vertically from the charge control boards 42, 42, and thus a connection between the charge control boards 42, 42 and the battery cells 41, 41 can be carried out by a wireless direct connection to realize downsizing, while the discharge control board 43 can be fitted and removed independently of the battery cells 41, 41 and the charge control boards 42, 42, and there is excellent ease of assembly and overhaul.

Further, the charge control circuits 42a, 42a of the charge control boards 42, 42 and the charge terminal 19 are connected in parallel to perform a parallel connection processing with respect to the respective battery cells 41, 41 for charging, and by a series connection with respect to the discharge control circuit 43a of the discharge control board 43, the battery cells 41, 41 make output to the electric motor 8 via the output terminal 18, and there is an effect to allow effectively combining a parallel connection and a series connection.

In addition, because of the configuration for inserting the charge control boards 42, 42 disposed on the battery cells 41, 41 into the battery case 9, moisture that may have intruded is deposited downward to have less influence on the boards 42, 42 themselves.

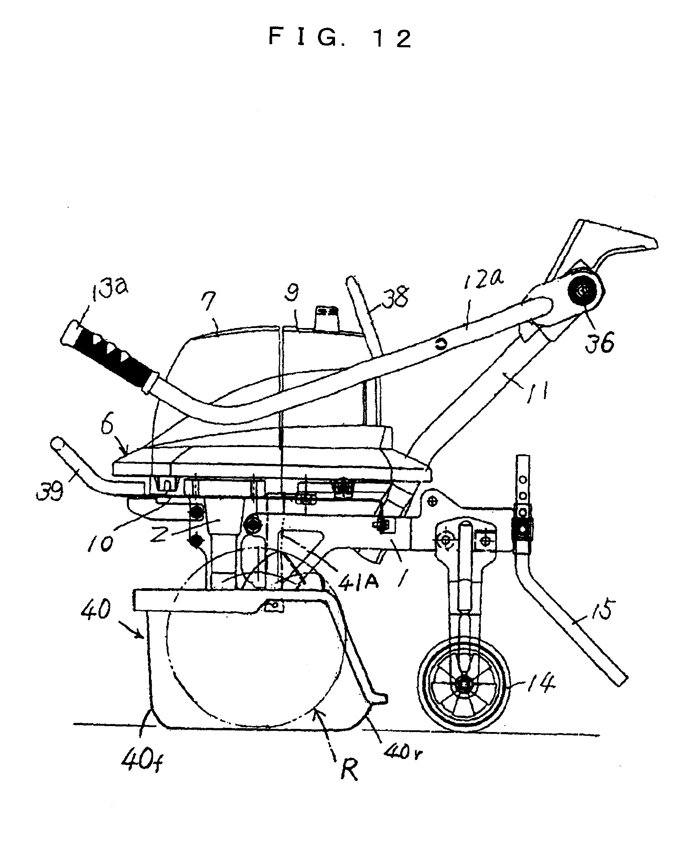

Description will next be given of a configuration for carrying the electric rotary tiller in the following, mainly based on Fig. 12.

A tightening knob 36 for fixing and adjusting the longitudinal position of the left and right operation handles 12a, 12b is provided on a connection portion between the handle frame 11 and the operation handles 12a, 12b. The tightening knob 36 is integrally provided at one end of a horizontal shaft 37 provided on the connection portion between the handle frame 11 and the operation handles 12a, 12b, and when the tightening knob 36 is loosened to fold the operation handles 12a, 12b about the horizontal shaft 37 used as a pivot point to the front side of the machine and the tightening knob 36 is tightened to fix the position, in a middle portion of the left and right operation handles 12a, 12b, a coupling rod 38 that is a bridge between the operation handles 12a, 12b is located at approximately the middle of the longitudinal length of the machine body and at approximately the position of the center of gravity of the machine body, and above the battery case 9. While the operator carries the electric rotary tiller, the battery case 9 can be prevented from coming off because he or she holds the coupling rod 38 or the coupling rod 38 and a bumper 39 attached extending forward to a front end portion of the body frame 10. Moreover, the coupling rod 38 has a configuration having approximately the shape of a gate in a front view when the left and right operation handles 12a, 12b are folded to the front side, and this configuration allows folding the left and right operation handles 12a, 12b further downward with out contacting the battery case 9.

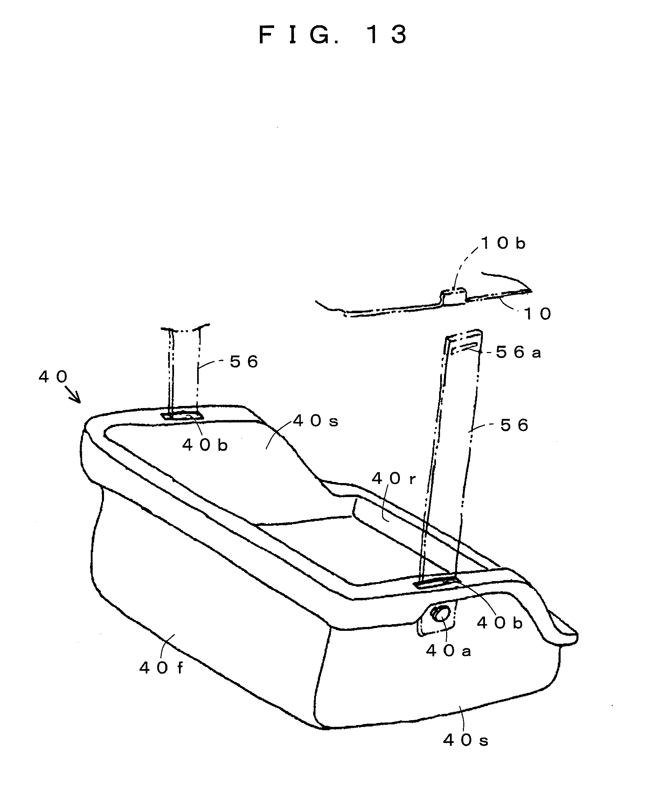

A bucket 40 to be attached to a position to cover the rotary section R at the bottom when the electric rotary tiller is carried is shown in Fig. 13 by a perspective view. The bucket 40 has a configuration for which a projection portion 40a with which a flexible rubber band 56 can be engaged is provided at left and right sides, and a slit 56a provided in an upper portion of the rubber band 56 is hung on a hook portion 10b formed on the side surface of the body frame 10 to be fitted to the machine body. Furthermore, the bucket 40 catches attached soil from the rotary section R, so as to prevent soil from scattering around when the electric rotary tiller is carried. In addition, the height of a rear wall 40r of the bucket 40 is formed lower than that of a front wall 40f. Moving the rotary tiller forward from behind with the bucket 40 placed on the ground therefore allows the rotary tiller to easily enter the bucket 40, so that in combination with the use of flexible rubber bands, handling such as fitting and removal is much easier than that compared with a configuration for folding up the rotary cover downward to surround the rotary section at the bottom or a supporting configuration using a support pipe of a resistance rod as conventionally adopted. In addition, hole portions 40b, 40b through which the rubber band 56 passes are provided in sidewalls 40s, 40s of the bucket 40.

Description will next be given of a configuration of a longitudinal balance of the electric rotary tiller of the present embodiment in the following.

There is provided a configuration where the axis center of a motor shaft 8a of a block-shaped motor 8 formed of a rectangular parallelepiped whose rectangular part formed by shorter sides is arranged on a plane of the body frame 10 is provided more forward than the position of the axis center of the rotary shaft 3, the battery case 9 is arranged more rearward than the axis center position of the rotary shaft 3, and the handle frame 11 is provided behind the battery case 9. This configuration allows taking the center of gravity of the electric rotary tiller as a whole near the battery case 9, and there is little change in the center of gravity of the electric rotary tiller as a whole even when the weight of the battery case 9 has changed due to a change in the capacity of the battery B to be housed in the battery case 9.

Description will next be given of a configuration of the LEDs 26 in the following.

There is provided in the vicinity of the power switch 16 a multiple-LED display section 26 indicating various operation states. More specifically, the power switch 16 and LED display section 26 are provided on an inclining upper surface 60a of a cover member 60 supported on the handle frame 11. There is provided a holder 61 supporting the LED display section 26 and the signal control board 51 so as to be located under the LED display section 26. This signal control board 51 is input with a signal of the power switch 16 and a signal of the limit switch 33 and connected to a pair 18b, 18b of the output terminals 18 through wiring accessories 62.

In the present embodiment, the LED display section 26 is provided with a power on/off LED 26a, an electric rotary tiller operation on/off LED 26b, and a battery level LED 26c. The power on/off LED 26a flashes in green, which is a first color, with the power switch 16 turned on, and flashes in red, which is a second color, when overload is detected to actuate the overcurrent protection circuit 45 provided on the wiring 20. The electric rotary tiller operation on/off LED 26b flashes in green, which is a first color, when the limit switch 33 is turned on to drive the rotary section R, and flashes in red, which is a second color, when a protection circuit (not shown) by a temperature sensor built in the motor 8 is activated. The battery level LED 26c flashes in green, which is a first color, when the remaining amount of the battery B is normal, and flashes in red, which is a second color, when the remaining amount reaches a predetermined amount or below. In addition, the power on/off LED 26a may be omitted.

Thus, displaying various operation states on the LED display section 26 and changing colors appropriately from the first color to the second color allows carrying out many motion displays with a small number of LEDs, and arranging the LED display section 26 in a manner concentrated in one point and at a position highly visible from the operation side makes it easy to confirm various operation statuses. Moreover, as a result of providing the LED display section 26 adjacent to the power switch 16, the LED display section 26 is always easily confirmed when turning on the power to off the power.

An electric rotary tiller including a rotary section R that tills a field, a motor 8 that drives the rotary section R, a transmission shaft 21 that transmits power of the motor 8 to the rotary section R, a transmission frame 2 equipped internally with the transmission shaft 21, a body frame 10 to be fixed onto the transmission frame 2, a motor cover 7 that covers the motor 8 from above, a battery case 9 having a battery B being a power supply of the motor 8 stored, and a rotary cover 6 that covers the rotary section R from above, in which an opening portion 6b is provided in a laterally middle portion of the rotary cover 6, a wall portion 6a is provided along both left and right sides of the opening portion 6b, the battery case (9) is placed on the body frame (10), the wall portion 6a supports left and right side surfaces of the battery case 9, and the battery case 9 is freely fitted and removed vertically from the body frame 10, which allows securely supporting the battery case 9 on the body frame 10, while easily allowing fitting and removing of the battery case 9.

## Claims

1. An electric rotary tiller comprising a rotary section (R) that tills a field, a motor (8) that drives the rotary section (R), a transmission shaft (21) that transmits power of the motor (8) to the rotary section (R), a transmission frame (2) equipped internally with the transmission shaft (21), a body frame (10) to be fixed on top of the transmission frame (2), a motor cover (7) that covers the motor (8) from above, a battery case (9) having a battery (B) being a power supply of the motor (8) stored, and a rotary cover (6) that covers the rotary section (R)from above, **characterized in that**
the battery case (9) is placed on the body frame (10), an opening portion (6b) is provided in a laterally middle portion of the rotary cover (6), a wall portion (6a) is formed along both left and right sides of the opening portion (6b), the battery case (9) is supported at its left and right side surfaces by the wall portion (6a), and the battery case (9) is freely fitted and removed vertically from the body frame (10).

2. The electric rotary tiller according to claim 1, **characterized in that** an output terminal (18) is provided exposed on a back surface side of the battery case (9), and a rear support wall portion (6d) that supports the back surface of the battery case (9) is provided on the rotary cover (6), and the rear support wall portion (6d) is lower than the wall portion (6a).

3. The electric rotary tiller according to claim 1 or claim 2, **characterized in that** a front surface of the battery case (9) is supported by a rear surface of the motor cover (7).

4. The electric rotary tiller according to claim 1, **characterized in that** a projection portion (9f) is provided on the bottom surface of the battery case (9), a hole portion (10a) into which the projection portion (9f) is inserted is formed on the body frame (10), a projection rib portion (9g) is formed extending vertically on a front surface of the battery case (9), a recess portion (7a) that engages with the projection rib portion (9g) is formed on a back surface of the motor cover (7), and the battery case (9) is fixable to the body frame (10).
